(19) **Europäisches Patentamt**
**European Patent Office**
**Office européen des brevets**

(11) **EP 2 015 936 B1**

(12) **EUROPEAN PATENT SPECIFICATION**

(45) Date of publication and mention
of the grant of the patent:
**27.02.2013 Bulletin 2013/09**

(51) Int Cl.:
*B32B 23/10* (2006.01)   *D04H 1/42* (2012.01)
*D04H 1/56* (2006.01)   *A62B 7/10* (2006.01)

(21) Application number: **07797272.7**

(22) Date of filing: **24.04.2007**

(86) International application number:
**PCT/US2007/067283**

(87) International publication number:
**WO 2007/133903 (22.11.2007 Gazette 2007/47)**

(54) **PARTICLE-CONTAINING FIBROUS WEB**

PARTIKEL MIT FASERNETZ

VOILE FIBREUX CONTENANT DES PARTICULES

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **08.05.2006 US 431152**

(43) Date of publication of application:
**21.01.2009 Bulletin 2009/04**

(73) Proprietor: **3M Innovative Properties Company
St. Paul, MN 55133-3427 (US)**

(72) Inventors:
• **TREND, John E.**
**Saint Paul, Minnesota 55133-3427 (US)**
• **MARTIN, Philip G.**
**Saint Paul, Minnesota 55133-3427 (US)**
• **BREY, Larry A.**
**Saint Paul, Minnesota 55133-3427 (US)**
• **JONES, Marvin E.**
**Saint Paul, Minnesota 55133-3427 (US)**
• **SCHUMANN, Larry A.**
**Saint Paul, Minnesota 55133-3427 (US)**
• **FANSLER, Duane D.**
**Saint Paul, Minnesota 55133-3427 (US)**
• **BILLINGSLEY, Britton G.**
**Saint Paul, Minnesota 55133-3427 (US)**
• **INSLEY, Thomas I.**
**Saint Paul, Minnesota 55133-3427 (US)**

(74) Representative: **Prichard, Leslie Stephen et al
3M Europe NV
Office of Intellectual Property Counsel
Hermeslaan 7
1831 Diegem (BE)**

(56) References cited:
EP-A1- 0 955 087    WO-A1-01/55494
US-A- 3 971 373    US-A- 4 665 050
US-A- 4 948 639    US-A- 4 948 639
US-A- 5 328 758    US-A- 5 328 758

## Description

### Cross-Reference to Related Application

This application is a continuation-in-part of pending Application Serial No. 10/983,770 filed November 8, 2004.

### Technical Field

This invention relates to particle-containing fibrous webs and filtration.

### Background

Respiratory devices for use in the presence of solvents and other hazardous airborne substances sometimes employ a filtration element containing sorbent particles. The filtration element may be a cartridge containing a bed of the sorbent particles or a layer or insert of filtration material impregnated or coated with the sorbent particles. Design of the filtration element may involve a balance of sometimes competing factors such as pressure drop, surge resistance, overall service life, weight, thickness, overall size, resistance to potentially damaging forces such as vibration or abrasion, and sample-to-sample variability.

Packed beds of sorbent particles typically provide the longest service life in the smallest overall volume. Packed beds typically are formed by placing the sorbent particles in a rigid housing between thin scrim layers and compressing the resulting assembly so that the sorbent particles form a well-packed bed. The compression step helps prevent the target gas or vapor component from bypassing ("channeling") the bed, but the rigid housing increases the filtration element weight, and the friable nature of some sorbents (e.g., carbon particles) may cause formation of fine particles which may undesirably escape from the bed during manufacturing, storage or use. The rigid housing, scrim layers and compression step can also increase pressure drop through the bed, thereby increasing breathing resistance. Fibrous webs loaded with sorbent particles often have lower pressure drop than a packed bed but may also have lower service life, greater bulk or larger sample-to-sample variability.

References relating to particle-containing fibrous webs include U.S. Patent Nos. 2,988,469 (Watson), 3,971,373 (Braun), 4,429,001 (Kolpin et al.), 4,681,801 (Eian et al.), 4,741,949 (Morman et al.), 4,797,3.18 (Brooker et al. '318), 4,948,639 (Brooker et al. '639), 5,035,240 (Braun et al. '240), 5,328,758 (Markell et al.), 5,720,832 (Minto et al.), 5,972,427 (Mühlfeld et al.), 5,885,696 (Groeger), 5,952,092 (Groeger et al. '092), 5,972,808 (Groeger et al. 808), 6,024,782 (Freund et al.), 6,024,813 (Groeger et al. '813), 6,077,588 (Koslow et al. '588), 6,102,039 (Springett et al.) and PCT Published Application Nos. WO 00/39379 and WO 00/39380. References relating to other particle-containing filter structures include U.S. Patent Nos. 3,217,715 (Berger wt al.), 3,474,600 (Tobias), 3,538,020 (Heskett et al.), 3,919,369 (Holden), 4,665,050 (Degen et al.), 4,790,306 (Braun et al. '306), 5,033,465 (Braun et al. '465), 5,078,132 (Braun et al. '132), 5,147,722 (Koslow), 5,332,426 (Tang et al.), 5,665,148 (Muhlfeld et al.), 6,391,429 (Senkus et al.) and 6,840,986 B1 (Koslow). Other references relating to fibrous webs include U.S. Patent No. 4,657,802 (Morman).

### Summary of the Invention

Although meltblown nonwoven webs containing activated carbon particles can be used to remove gases and vapors from air, it can be difficult to use such webs in replaceable filter cartridges for gas and vapor respirators. For example, when webs are formed from meltblown polypropylene and activated carbon particles, the readily-attainable carbon loading level ordinarily is about 100 to 200 $g/m^2$. If such webs are cut to an appropriate shape and inserted into replaceable cartridge housings, the cartridges may not contain enough activated carbon to meet capacity requirements set by the applicable standards-making bodies. Although higher carbon loading levels may be attempted, the carbon particles may fall out of the web thus making it difficult to handle the web in a production environment and difficult reliably to attain a targeted final capacity. Post-formation operations such as vacuum forming can also be employed to densify the web, but this requires additional production equipment and extra web handling.

Our above-mentioned Application Serial No. 10/983,770 describes highly-loaded particle-containing nonwoven webs fabricated from polymers whose fibers are sufficiently elastic or sufficiently shrink-prone and from sorbent particles that are sufficiently evenly distributed in the web so that the web has an Adsorption Factor **A** of at least $1.6 \times 10^4$/mm water (*viz.*, at least $1.6 \times 10^4$ (mm water)$^{-1}$). The disclosed webs can be fashioned into porous sheet articles (e.g., replaceable filter elements for gas and vapor respirators) having a very desirable combination of high service life, low pressure drop and relatively low carbon shedding tendencies. The disclosed filter elements are especially useful for mass producing replaceable filter cartridges using automated equipment.

The Adsorption Factor **A** is affected by several factors discussed in more detail below. In general for a given vapor-absorbing filtration material, a large Adsorption Factor **A** will correspond to a desirable combination of favorable cyclohexane vapor absorption kinetics, long service life before breakthrough of objectionable vapor levels, and low filter pressure drop. We observed especially large Adsorption Factor **A** values for webs made from thermoplastic polyurethanes and about 86 weight or more percent carbon particles. Several such webs unexpectedly exhibited an Adsorption Factor **A** greater than that of a high-quality packed carbon bed (*viz.*, greater than about 3.16 X $10^4$/mm water).

Our Adsorption Factor **A** measurements were made using cyclohexane. We also prepared sorbent filtration webs made from thermoplastic polyurethane fibers and about 86 to 91 weight percent carbon particles, exposed them to a number of other organic materials, and obtained generally favorable results. One such organic material, namely dimethyl methyl phosphonate ("DMMP"), also was efficiently absorbed. However, rather than only being absorbed by the carbon particles, DMMP also appeared to have been absorbed as well by the polyurethane web fibers. Such fiber absorption might cause weakening or other degradation of the web structure.

Polypropylene has previously been regarded as an especially good material for making carbon-loaded webs. DMMP is not appreciably absorbed by polypropylene web fibers, and has not previously been a problem in such webs even at high carbon loading levels.

The present invention provides, in one aspect, a porous sheet article comprising a self-supporting nonwoven web of less than 20 weight percent polymeric fibers exhibiting no more than about 1 weight percent dimethyl methyl phosphonate uptake and at least 80 weight percent sorbent particles enmeshed in the web, the sorbent particles being sufficiently evenly distributed in the web and the fiber polymer(s) being such that the web has an Adsorption Factor **A** of at least 1.6 X $10^4$/mm water.

In another aspect, the invention provides a process for making a porous sheet article comprising a self-supporting nonwoven web of polymeric fibers and sorbent particles, the process comprising:

a) flowing molten polymer through a plurality of orifices to form filaments;
b) attenuating the filaments into fibers;
c) directing a stream of sorbent particles amidst the filaments or fibers; and
d) collecting the fibers and sorbent particles as a nonwoven web comprising less than 20 weight percent polymeric fibers exhibiting no more than about 1 weight percent dimethyl methyl phosphonate uptake and at least 80 weight percent sorbent particles enmeshed in the web

wherein the sorbent particles are sufficiently evenly distributed in the web and the polymer is such that that the web has an Adsorption Factor **A** of at least 1.6 X $10^4$/mm water.

In another aspect the invention provides a respiratory device having an interior portion that generally encloses at least the nose and mouth of a wearer, an air intake path for supplying ambient air to the interior portion, and a porous sheet article disposed across the air intake path to filter such supplied air, the porous sheet article comprising a self-supporting nonwoven web of less than 20 weight percent polymeric fibers exhibiting no more than about 1 weight percent dimethyl methyl phosphonate uptake and at least 80 weight percent sorbent particles enmeshed in the web, the sorbent particles being sufficiently evenly distributed in the web and the fiber polymer(s) being such that the article has an Adsorption Factor **A** of at least 1.6 X $10^4$/mm water.

In yet another aspect the invention provides a replaceable filter element for a respiratory device, the element comprising a support structure for mounting the element on the device, a housing and a porous sheet article disposed in the housing so that the element can filter air passing into the device, the article comprising a self-supporting nonwoven web of less than 20 weight percent polymeric fibers exhibiting no more than about 1 weight percent dimethyl methyl phosphonate uptake and at least 80 weight percent sorbent particles enmeshed in the web, the sorbent particles being sufficiently evenly distributed in the web and the fiber polymer(s) being such that that the element has an Adsorption Factor A of at least 1.6 X $10^4$/mm water.

These and other aspects of the invention will be apparent from the detailed description below. In no event, however, should the above summaries be construed as limitations on the claimed subject matter, which subject matter is defined solely by the attached claims, as may be amended during prosecution.

**Brief Description of the Drawing**

**Fig. 1** is a schematic cross-sectional view of a disclosed porous sheet article;
**Fig. 2** is a schematic cross-sectional view of a disclosed multilayer porous sheet article;
**Fig. 3** is a schematic view, partially in cross-section, of a disclosed replaceable filter element;
**Fig. 4** is a perspective view of a disclosed respiratory device utilizing the element of **Fig. 3**;
**Fig. 5** is a perspective view, partially cut away, of a disclosed disposable respiratory device utilizing the porous sheet article of **Fig. 1**;
**Fig. 6** is a schematic cross-sectional view of a meltblowing apparatus for making porous sheet articles.
**Fig. 7** is a schematic cross-sectional view of a spun bond process apparatus for making porous sheet articles.

**Fig. 8** is a schematic cross-sectional view of another meltblowing apparatus for making porous sheet articles.

**Fig. 9** and **Fig. 10** are graphs showing service life comparisons.

Like reference symbols in the various figures of the drawing indicate like elements. The elements in the drawing are not to scale.

**Detailed Description**

As used in this specification with respect to a sheet article, the word "porous" refers to an article that is sufficiently permeable to gases so as to be useable in a filter element of a personal respiratory device.

The phrase "nonwoven web" refers to a fibrous web characterized by entanglement or point bonding of the fibers.

The term "self-supporting" refers to a web having sufficient coherency and strength so as to be drapable and handleable without substantial tearing or rupture.

The phrase "attenuating the filaments into fibers" refers to the conversion of a segment of a filament into a segment of greater length and smaller diameter.

The word "meltblowing" means a method for forming a nonwoven web by extruding a fiber-forming material through a plurality of orifices to form filaments while contacting the filaments with air or other attenuating fluid to attenuate the filaments into fibers and thereafter collecting a layer of the attenuated fibers.

The phrase "melt blown fibers" refers to fibers made using meltblowing. The aspect ratio (ratio of length to diameter) of melt blown fibers is essentially infinite (e.g., generally at least about 10,000 or more), though melt blown fibers have been reported to be discontinuous. The fibers are long and entangled sufficiently that it is usually not possible to remove one complete melt blown fiber from a mass of such fibers or to trace one melt blown fiber from beginning to end.

The phrase "spun bond process" means a method for forming a nonwoven web by extruding a low viscosity melt through a plurality of orifices to form filaments, quenching the filaments with air or other fluid to solidify at least the surfaces of the filaments, contacting the at least partially solidified filaments with air or other fluid to attenuate the filaments into fibers and collecting and optionally calendaring a layer of the attenuated fibers.

The phrase "spun bond fibers" refers to fibers made using a spun bond process. Such fibers are generally continuous and are entangled or point bonded sufficiently that it is usually not possible to remove one complete spun bond fiber from a mass of such fibers.

The phrase "nonwoven die" refers to a die for use in meltblowing or the spun bond process.

The word "enmeshed" when used with respect to particles in a nonwoven web refers to particles that are sufficiently bonded to or entrapped within the web so as to remain within or on the web when the web is subjected to gentle handling such as draping the web over a horizontal rod.

The phrase "exhibiting no more than about 1 weight percent DMMP uptake" when used with respect to polymeric fibers refers to the weight change in an unloaded web of such fibers (*viz.,* a sorbent-free web made from otherwise similar polymeric fibers) after the unloaded web has been placed in air saturated with DMMP vapor at room temperature for six days. This may be carried out by placing the unloaded web in a sealed desiccator containing liquid DMMP. The web is not allowed to contact the liquid DMMP.

The phrase "elastic limit" when used with respect to a polymer refers to the maximum distortion that a body formed from the polymer can undergo and return to its original form when relieved from stress.

The words "elastic" or "elasticity" when used with respect to a polymer refer to a material that has an elongation at its elastic limit of greater than about 10% as measured using ASTM D638 - 03, Standard Test Method for Tensile Properties of Plastics.

The phrase "crystallization shrinkage" refers to the irreversible change in length of an unconstrained fiber that may occur when the fiber passes from a less ordered, less crystalline state to a more ordered, more crystalline state, e.g. due to polymer chain folding or polymer chain rearrangement.

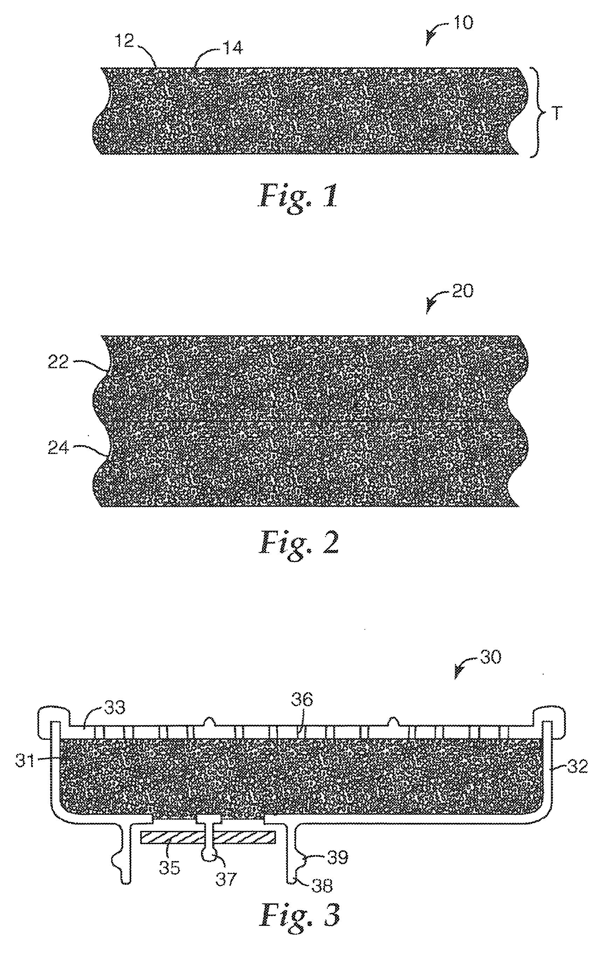

Referring to **Fig. 1**, a disclosed porous sheet article **10** is shown schematically in cross-section. Article **10** has a thickness **T** and a length and width of any desired dimension. Article **10** is a nonwoven web containing entangled polymeric fibers **12** and sorbent carbon particles **14** enmeshed in the web. Small connected pores (not identified in **Fig. 1**) in article **10** permit ambient air or other fluids to pass (e.g., to flow) through the thickness dimension of article **10**. Particles **14** absorb solvents and other potentially hazardous substances present in such fluids. Fibers **12** desirably do not absorb, adsorb, solvate or otherwise exhibit uptake of such substances.

**Fig. 2** shows a cross-sectional view of a disclosed multilayer article **20** having two nonwoven layers **22** and **24**. Layers **22** and **24** each contain fibers and sorbent particles (not identified in **Fig. 2**). Layers **22** and **24** may be the same as or different from one another and may be the same as or different from article **10** in **Fig. 1**. For example, when the sorbent particles in layers **22** and **24** are made from different substances, then different potentially hazardous substances may be removed from fluids passing through article **20**. When the sorbent particles in layers **22** and **24** are made from the same substances, then potentially hazardous substances may be removed more effectively or for longer service periods from fluids passing through the thickness dimension article **20** than from a single layer article of equivalent overall composition and thickness. Multilayer articles such as article **20** can if desired contain more than two nonwoven layers, e.g. three or more, four or more, five or more or even 10 or more layers.

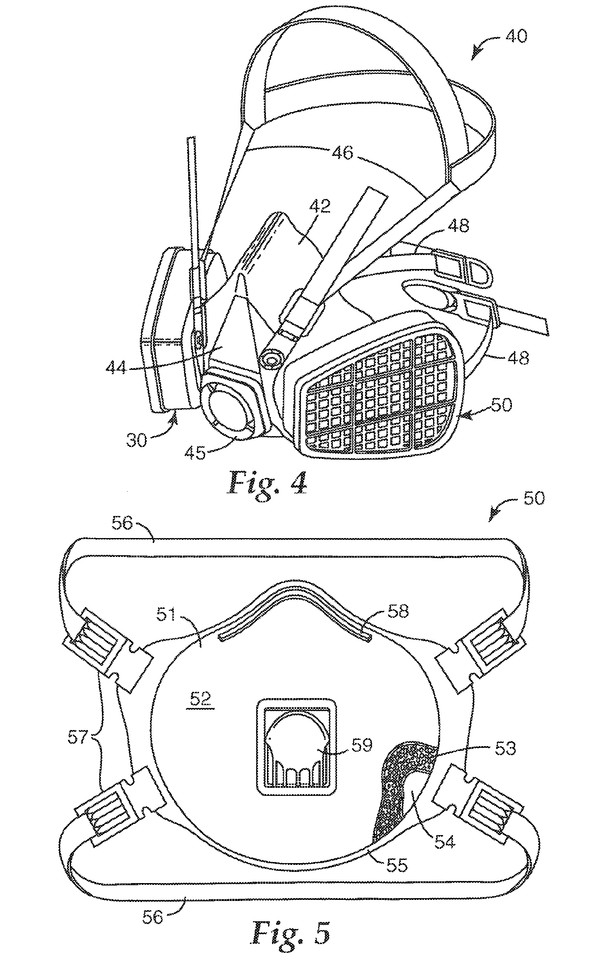

**Fig. 3** shows a cross-sectional view of disclosed filter element **30**. The interior of element **30** can be filled with a porous sheet article **31** such as those shown in **Fig. 1** or **Fig. 2**. Housing **32** and perforated cover **33** surround sheet article **31**. Ambient air enters filter element **30** through openings **36**, passes through sheet article **31** (whereupon potentially hazardous substances in such ambient air are absorbed by particles in sheet article **31**) and exits element **30** past intake air valve **35** mounted on support **37**. Spigot **38** and bayonet flange **39** enable filter element **30** to be replaceably attached to a respiratory device such as disclosed device **40** in **Fig. 4**. Device **40** is a so-called half mask like that shown in U.S. Patent No. 5,062,421 (Burns et al.). Device **40** includes soft, compliant face piece **42** that can be insert molded around relatively thin, rigid structural member or insert **44**. Insert **44** includes exhalation valve **45** and recessed bayonet-threaded openings (not shown in **Fig. 4**) for removably attaching filter elements **30** in the cheek regions of device **40**. Adjustable headband **46** and neck straps **48** permit device **40** to be securely worn over the nose and mouth of a wearer. Further details regarding the construction of such a device will be familiar to those skilled in the art.

**Fig. 5** shows a disclosed respiratory device **50** in partial cross-section. Device **50** is a disposable mask like that shown in U.S. Patent No. 6,234,171 B1 (Springett et al.). Device **50** has a generally cup-shaped shell or respirator body **51** made from an outer cover web **52**, nonwoven web **53** containing sorbent particles such as those shown in **Fig. 1 or Fig. 2**, and inner cover web **54**. Welded edge **55** holds these layers together and provides a face seal region to reduce leakage past the edge of device **50**. Device **50** includes adjustable head and neck straps **56** fastened to device **50** by tabs **57**, pliable dead-soft metal nose band **58** of a metal such as aluminum and exhalation valve **59**. Further details regarding the construction of such a device will be familiar to those skilled in the art.

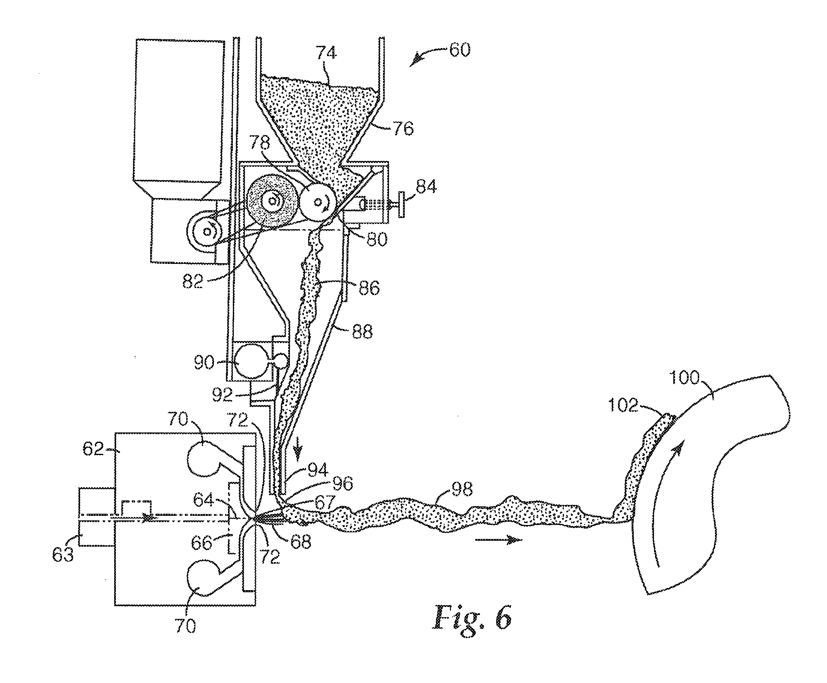

**Fig. 6** shows a disclosed apparatus **60** for making nonwoven particle-loaded webs using meltblowing. Molten fiber-forming polymeric material enters nonwoven die **62** via inlet **63**, flows through die slot **64** of die cavity **66** (all shown in phantom), and exits die cavity **66** through orifices such as orifice **67** as a series of filaments **68**. An attenuating fluid (typically air) conducted through air manifolds **70** attenuates filaments **68** into fibers **98**. Meanwhile, sorbent particles **74** pass through hopper **76** past feed roll **78** and doctor blade **80**. Motorized brush roll **82** rotates feed roll **78**. Threaded adjuster **84** can be moved to improve crossweb uniformity and the rate of particle leakage past feed roll **78**. The overall particle flow rate can be adjusted by altering the rotational rate of feed roll **78**. The surface of feed roll **78** may be changed to optimize feed performance for different particles. A cascade **86** of sorbent particles **74** falls from feed roll **78** through chute **88**. Air or other fluid passes through manifold **90** and cavity **92** and directs the falling particles **74** through channel **94** in a stream **96** amidst filaments **68** and fibers **98**. The mixture of particles **74** and fibers **98** lands against porous collector **100** and forms a self-supporting nonwoven particle-loaded meltblown web **102**. Further details regarding the manner in which meltblowing would be carried out using such an apparatus will be familiar to those skilled in the art.

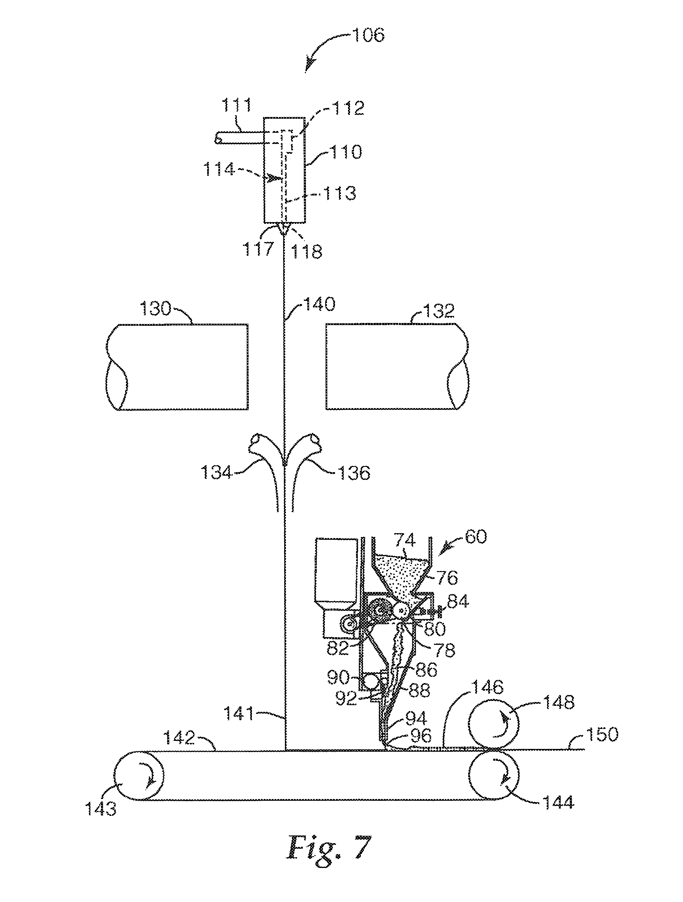

**Fig. 7** shows a disclosed apparatus **106** for making nonwoven particle-loaded webs using a spun bond process. Molten fiber-forming polymeric material enters generally vertical nonwoven die **110** via inlet **111**, flows downward through manifold **112** and die slot **113** of die cavity **114** (all shown in phantom), and exits die cavity **114** through orifices such as orifice **118** in die tip **117** as a series of downwardly-extending filaments **140**. A quenching fluid (typically air) conducted via ducts **130** and **132** solidifies at least the surfaces of the filaments **140**. The at least partially solidified filaments **140** are drawn toward collector **142** while being attenuated into fibers **141** by generally opposing streams of attenuating fluid (typically air) supplied under pressure via ducts **134** and **136**. Meanwhile, sorbent particles **74** pass through hopper **76** past feed roll **78** and doctor blade **80** in an apparatus like that shown by components **76** through **94** in **Fig. 6**. Stream **96** of particles **74** is directed through nozzle **94** amidst fibers **141**. The mixture of particles **74** and fibers **141** lands against porous collector **142** carried on rollers **143** and **144** and forms a self-supporting nonwoven particle-loaded spun bond web **146**. Calendaring roll **148** opposite roll **144** compresses and point-bonds the fibers in web **146** to produce calendered spun bond nonwoven particle-loaded web **150**. Further details regarding the manner in which spun bonding would be carried out using such an apparatus will be familiar to those skilled in .the art.

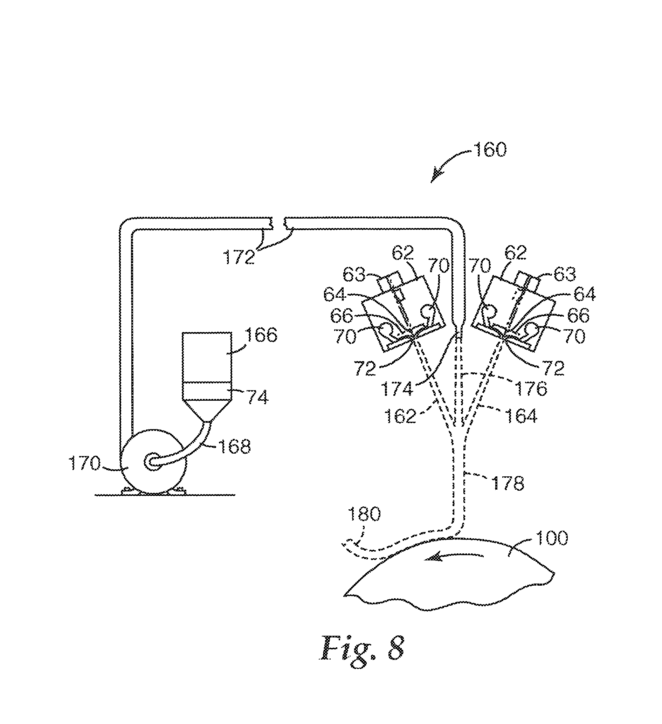

**Fig. 8** shows a disclosed apparatus **160** for making nonwoven particle-loaded webs using meltblowing. This apparatus employs two generally vertical, obliquely-disposed nonwoven dies **66** that project generally opposing streams of filaments **162**, **164** toward collector **100**. Meanwhile, sorbent particles **74** pass through hopper **166** and into conduit **168**. Air impeller **170** forces air through a second conduit **172** and accordingly draws particles from conduit **168** into the second conduit **172**. The particles are ejected through nozzle **174** as particle stream **176** whereupon they mingle with the filament streams **162** and **164** or with the resulting attenuated fibers **178**. The mixture of particles **74** and fibers **178** lands against porous collector **100** and forms a self-supporting nonwoven particle-loaded nonwoven web **180**. Further details regarding the manner in which meltblowing would be carried out using the **Fig. 8** apparatus will be familiar to those skilled in the art.

A variety of fiber-forming polymeric materials can be employed, including thermoplastics and especially extensible thermoplastics such as linear low density polyethylenes (e.g., those available under the trade designation DOWLEX™ from Dow Chemical Company), polyolefin elastomers (e.g., those available under the trade designations ENGAGE™ from Dow Chemical Company and VISTAMAXX™ from ExxonMobil Chemical Company), ethylene alpha-olefin copolymers (e.g., the ethylene butene, ethylene hexene or ethylene octene copolymers available under the trade designations EXACT™ from ExxonMobil Chemical Company and ENGAGE™ from Dow Chemical Company), ethylene vinyl acetate polymers (e.g., those available under the trade designations ELVAX™ from E. I. DuPont de Nemours & Co.), polybutylene elastomers (e.g., those available under the trade designations CRASTIN™ from E. I. DuPont de Nemours & Co. and POLYBUTENE-1™ from Basell Polyolefins), elastomeric styrenic block copolymers (e.g., those available under the trade designations KRATON™ from Kraton Polymers and SOLPRENE™ from Dynasol Elastomers) and polyether block copolyamide elastomeric materials (e.g., those available under the trade designation PEBAX™ from Atofina Chemicals, Inc.). Polyolefin elastomers are especially preferred. The polymeric material may if desired be made from comonomers or modified with reactive species that alter the polymeric material backbone. Desirably however the polymeric material is not modified with reactive species that cause the disclosed webs to exhibit objectionable levels of DMMP uptake or to exhibit low Adsorption Factor **A** values. For example, unloaded webs based on the EVA polymer ELVAX 3174 appear to exhibit less than 1 wt. % DMMP uptake. However, tests carried out by exposing a solid disc of the anhydride-modified EVA polymer BYNEL 3022 to air saturated with DMMP vapor indicate that an unloaded web made from BYNEL 3022 EVA might absorb considerably greater amounts of DMMP.

The disclosed webs may be made from blends of polymeric materials, e.g., blends of polyolefin elastomers and elastomeric styrenic block copolymers. If desired, a portion of the disclosed web can represent polymers or other fibrous or fiber-forming materials which would not by themselves exhibit adequate resistance to DMMP uptake or which would not by themselves provide a web with the desired Adsorption Factor **A**. For example, suitably loaded webs made from the linear low density polyethylene DOWLEX 2517 are shown below to have an Adsorption Factor **A** of about 2.1 X $10^4$/mm water, whereas a similarly loaded web made from the linear low density polyethylene DOWLEX 2503 is shown below to have an Adsorption Factor A of about 1.0 X $10^4$/mm water. Also, unloaded webs made from 90:10 and 50:50 blends of the polyolefin elastomer ENGAGE 8402 and the styrenic block copolymer KRATON G1657 are shown below to have very low DMMP uptake, and a 91 wt % carbon-loaded web in which the polymeric material is only ENGAGE 8402 is shown below to have an Adsorption Factor **A** of about 2.6 X $10^4$/mm water, whereas an 88 wt. % carbon-loaded web in which the polymeric material is only KRATON G 1657 is shown below to exhibit an Adsorption Factor **A** of about 1.4 X $10^4$/mm water.

The disclosed webs may also or in addition be formed from multicomponent fibers such as core-sheath fibers, splittable or side-by-side bicomponent fibers or so-called "islands in the sea" fibers with one or more but not necessarily all of the polymeric components being materials such as those described above. In addition, the disclosed webs may be formed using other polymeric materials as one or more of the components, or by adding other fibrous or fiber-forming materials including staple fibers (e.g., of natural or synthetic materials) and the like. Preferably however relatively low amounts of such other fibrous or fiber-forming materials are employed in the disclosed webs so as not to detract unduly from the desired sorbent particle loading level and finished web properties.

The polymer fibers as noted above exhibit no more than about 1 weight percent DMMP uptake after an unloaded web of such fibers has been exposed to air saturated with DMMP vapor at room temperature for six days. The polymer fibers may under such conditions exhibit no more than about 0.5 weight percent DMMP uptake, no more than about 0.3 weight percent DMMP uptake or no more than about 0.2 weight percent DMMP uptake. More accurate DMMP uptake measurements may be obtained using larger samples, and thus it is desirable to employ an unloaded web sample weighing at least 0.4 g, more preferably at least 0.5 g and yet more preferably at least 1 g or even 10 g.

The polymer may in fiber form have (but is not required to have) greater elasticity than similar caliper polypropylene fibers. The polymer also may be but is not required to be elastomeric, *viz.*, a material which may be stretched to at least 125 percent of its initial relaxed length and which will recover to substantially its initial relaxed length upon release of the biasing force. The polymer also may in fiber form have (but is not required to have) greater crystallization shrinkage than similar caliper polypropylene fibers. Without intending to be bound by theory, we believe that fibers having such elasticity or crystallization shrinkage characteristics may promote autoconsolidation or densification of the disclosed webs, reduction in the web pore volume or reduction in the pathways through which gases can pass without encountering an available sorbent particle. Densification may be promoted in some instances by forced cooling of the web using, e.g., a spray of water or other cooling fluid, or by annealing the collected web in an unrestrained or restrained manner. Preferred annealing times and temperatures will depend on various factors including the polymeric fibers employed and the sorbent particle loading level.

A variety of sorbent particles can be employed. Desirably the sorbent particles will be capable of absorbing or adsorbing gases, aerosols or liquids expected to be present under the intended use conditions. The sorbent particles can be in any usable form including beads, flakes, granules or agglomerates. Preferred sorbent particles include activated carbon; alumina and other metal oxides; sodium bicarbonate; metal particles (e.g., silver particles) that can remove a component from a fluid by adsorption, chemical reaction, or amalgamation; particulate catalytic agents such as hopcalite (which can catalyze the oxidation of carbon monoxide); clay and other minerals treated with acidic solutions such as acetic acid or alkaline solutions such as aqueous sodium hydroxide; ion exchange resins; molecular sieves and other zeolites; silica; biocides; fungicides and virucides. Activated carbon and alumina are particularly preferred sorbent particles. Mixtures of sorbent particles can be employed, e.g., to absorb mixtures of gases, although in practice to deal with mixtures of gases it may be better to fabricate a multilayer sheet article employing separate sorbent particles in the individual layers. The desired sorbent particle size can vary a great deal and usually will be chosen based in part on the intended service conditions. As a general guide, the sorbent particles may vary in size from about 5 to 3000 micrometers average diameter. Preferably the sorbent particles are less than about 1500 micrometers average diameter, more preferably between about 30 and about 800 micrometers average diameter, and most preferably between about 100 and about 300 micrometers average diameter. Mixtures (e.g., bimodal mixtures) of sorbent particles having different size ranges can also be employed, although in practice it may be better to fabricate a multilayer sheet article employing larger sorbent particles in an upstream layer and smaller sorbent particles in a downstream layer. At least 80 weight percent sorbent particles, more preferably at least 84 weight percent and most preferably at least 90 weight percent sorbent particles are enmeshed in the web. Expressed in terms of the web basis weight, the sorbent particle loading level may for example be at least about 500 $g/m^2$ (gsm) for relatively fine (viz., small diameter) sorbent particles, and at least about 2,000 $g/m^2$ for relatively coarse sorbent particles.

In some embodiments the service life may be affected by whether the collector side of the disclosed web is oriented upstream or downstream with respect to the expected fluid flow direction. Depending sometimes on the particular sorbent particle employed, improved service lives have been observed using both orientations. As noted above, service life may also be affected by employing layers of webs containing differently-sized sorbent particles.

The disclosed nonwoven web or filter element has an Adsorption Factor **A** of at least $1.6 \times 10^4$/mm water. The Adsorption Factor **A** can be calculated using parameters or measurements similar to those described in Wood, Journal of the American Industrial Hygiene Association, 55(1):11-15 (1994), where:

$k_v$ = effective adsorption rate coefficient ($min^{-1}$) for the capture of $C_6H_{12}$ vapor by the sorbent according to the equation: $C_6H_{12}$ vapor $\rightarrow$ $C_6H_{12}$ absorbed on the sorbent.

$W_e$ = effective adsorption capacity ($gC_6H_{12}/g_{Sorbent}$) for a packed sorbent bed or sorbent loaded web exposed to 1000 ppm $C_6H_{12}$ vapor flowing at 30 L/min (face velocity 4.9 cm/s) and standard temperature and pressure, determined using iterative curve fitting for an adsorption curve plotted from 0 to 50 ppm (5%) $C_6H_{12}$ breakthrough.

**SL** = service life (min) for a packed sorbent bed or sorbent loaded web exposed to 1000 ppm $C_6H_{12}$ vapor flowing at 30 L/min (face velocity 4.9 cm/s) and standard temperature and pressure, based on the time required to reach 10 ppm (1%) $C_6H_{12}$ breakthrough.

$\Delta$**P** = pressure drop (mm water) for a packed sorbent bed or sorbent loaded web exposed to air flowing at 85 L/min (face velocity 13.8 cm/s) and standard temperature and pressure.

The parameter $k_v$ is usually not measured directly. Instead, it can be determined by solving for $k_v$ using multivariate curve fitting and the equation:

$$\frac{Cx}{Co} = \left( 1 + \exp \left[ \frac{kv \times W}{\rho\beta \times Q} - \frac{kv \times Co \times t}{We \times \rho\beta \times 10^3} \right] \right)^{-1}$$

where

**Q =** Challenge flow rate (L/min)

**Cx** = $C_6H_{12}$ exit concentration (g/L).

**Co** = $C_6H_{12}$ inlet concentration (g/L).

**W** = sorbent weight (g).

**t** = exposure time.

$\rho\beta$ **=** density of a packed sorbent bed or the effective density of a sorbent loaded web where $g_{Sorbent}$ is the weight of sorbent material (excluding the web weight, if present), $cm^3_{Sorbent}$ is the overall volume of sorbent, $cm^3_{Web}$ is the overall volume of sorbent loaded web, and $\rho\beta$ has the units $g_{Sorbent}/cm^3_{Sorbent}$ for a packed bed or $g_{Sorbent}/cm^3 Web$ for a sorbent loaded web.

The Adsorption Factor **A** can then be determined using the equation:

$$A = (k_v \times SL)/\Delta P.$$

The Adsorption Factor may be for example at least $2 \times 10^4$/mm water, at least $3 \times 10^4$/mm water, at least $4 \times 10^4$/mm water or at least $5 \times 10^4$/mm water. Surprisingly, some embodiments of the invention have Adsorption Factors above those found in a high-quality packed carbon bed, which as shown in Comparative Example I below is about $3.16 \times 10^4$/mm water.

A further factor $A_{vol}$ which relates the Adsorption Factor $A$ to the total product volume can also be calculated. $A_{vol}$ has the units $g_{Sorbent}$/$cm^3_{Web}$-mm water, and can be calculated using the equation:

$$A_{vol} = A \times \rho\beta$$

Preferably $A_{vol}$ is at least about $3 \times 10^3$ $g_{Sorbent}$/$cm^3_{Web}$-mm water, more preferably at least about $6 \times 10^3$ $g_{Sorbent}$/$cm^3_{Web}$-mm water, and most preferably at least about $9 \times 10^3$ $g_{Sorbent}$/$cm^3_{Web}$-mm water.

The disclosed porous sheet materials may be used to capture or adsorb a wide variety of chemical materials, including organic solvents, inorganic vapors and other materials that will be familiar to those skilled in the art. As will be familiar to those skilled in the art, one or more additional layers such as cover web(s), stiffening layer(s), particulate filtration layer(s) such as charged nonwoven webs or other functional or decorative layers may also be employed. The disclosed porous sheet materials are especially useful for fabricating replaceable cartridges for personal respirators intended for use in solvent-containing atmospheres. However, the disclosed porous sheet materials have a variety of additional uses. For example, they may be employed in personal or collective protective equipment such as chemical protective suits, hoods, individual enclosures (e.g., isolation chambers), shelters (e.g., tents or other portable or permanent structures) and other personal or collective protection devices into which air is filtered through the porous sheet article. The disclosed porous sheet materials may also be supported by a suitable housing to provide a filter for conditioning the gases entering into or circulating in an enclosed area such as a building or vehicle. The disclosed porous sheet materials may also be used to provide a prefilter or postfilter that can be combined with a further (e.g., an existing) filter structure. Additional uses will be familiar to those skilled in the art.

The invention will now be described with reference to the following nonlimiting examples, in which all parts and percentages are by weight unless otherwise indicated.

## Example 1

Using a meltblowing apparatus with a single horizontal stream of filaments like that shown in **Fig. 6**, a 230-300° C polymer melt temperature (depending on the polymer and desired fiber size), a drilled orifice die and a 32 cm die-to-collector distance, a series of meltblown carbon-loaded nonwoven webs was prepared using various fiber-forming polymeric materials extruded at about 300 g/hour/cm of die width for the thermoplastic polyurethane used in Run No. 2 (see Table 1, shown below) and about 230 g/hour/cm of die width for the remaining polymeric materials shown in Table 1. The extruder temperature and air velocity (and as needed, other processing parameters) were adjusted to obtain webs having about a 16 to 29 micrometer effective fiber diameter ("EFD"), with most of the webs having about a 20 to 29 micrometer EFD. EFD values were determined using an air flow rate of 32 L/min (corresponding to a face velocity of 5.3 cm/sec) according to the method set forth in Davies, C. N., "The Separation of Airborne Dust and Particles", Institution of Mechanical Engineers, London, Proceedings 1B, 1952, by examining swatches of unloaded web made before the sorbent particles were allowed to fall from feed roll **78** (see **Fig. 6**) into the web. Some of the webs were annealed as indicated below. The completed webs were evaluated to determine the carbon loading level and the parameters **EFD, $k_v$, SL**, $\Delta P$, $\rho\beta$, **A** and **$A_{vol}$**. For some webs data was obtained using a stack of 2-4 webs. For these webs the ratio **SL**/$\Delta P$ provided a somewhat more useful measurement than the individual **SL** and $\Delta P$ values. For other webs data was obtained using a single layer web and recording **SL**, $\Delta P$ and **SL**/$\Delta P$. Comparison data was gathered for a $10^4$cm$^3$ packed carbon bed made from Kuraray Type GG 12 x 20 activated carbon and for webs made from polypropylene. Set out below in Table 1 are the Run Number, polymeric material, carbon sieve size, carbon loading level, effective fiber diameter (EFD), and the parameters **EFD**, **SL** (where noted), **$k_v$**, **SL**/$\Delta P$, $\rho\beta$, **A** and **$A_{vol}$**. The entries in Table 1 are sorted in descending order according to the Adsorption Factor **A** value.

**Table 1**

| Run No. | Polymeric Material | Carbon Sieve Size | Loading Level, % | EFD, μm | SL, min | $k_v$, min$^{-1}$ | SL/ΔP, min/ mm H$_2$O | ρβ, g/cm$^3$ | A, /mm water | A$_{vol}$, g$_{sorbent}$/ cm$^3_{Web}$-mm water |
|---|---|---|---|---|---|---|---|---|---|---|
| 1 | EXACT 3040[1] | 12x20 | 91 | 29 | 24.2 | 2611 | 12.8 | 0.24 | 33371 | 8065 |
| 2 | PS440-200[2] | 12x20 | 91 | 20.4 | - | 1946 | 17 | 0.21 | 33082 | 6947 |
| 3 | None (packed 104 cm$^3$ bed) | 12x20 | 100 | - | - | 7220 | 4.1 | 0.43 | 29602 | 12729 |
| 4 | VISTAMAXX VM2125[3] | 12x20 | 92 | 29.2 | 23.2 | 2025 | 13.7 | 0.22 | 27653 | 6017 |
| 5 | ENGAGE 8402[4] | 12x20 | 91 | 24.7 | 25.8 | 2911 | 8.9 | 0.23 | 25875 | 5904 |
| 6 | 50% FINA 3868[5] + 50% PB 0400 [6] | 12x20 | 90 | 21.5 | - | 1726 | 13.5 | 0.20 | 23301 | 4660 |
| 7 | 50% FINA 3868[5] + 50% PB 0400[6] (web annealed 5 min.) | 12x20 | 90 | 21.5 | - | 1757 | 13.2 | 0.20 | 23192 | 4638 |
| 8 | DOWLEX 2517[7] | 12x20 | 90 | 29.2 | 13.2 | 2368 | 8.7 | 0.22 | 21031 | 4706 |
| 9 | 100% PB 0400[6] | 12x20 | 90 | 20.7 | - | 1868 | 10.1 | 0.20 | 18864 | 3716 |
| 10 | VISTAMAXX VM2330[8] | 40x140 | 96 | 21.1 | 13.5 | 9562 | 2.0 | 0.28 | 18754 | 5174 |
| 11 | 20% FINA 3868[5] + 80% PB 0400 [6] | 12x20 | 89 | 20.3 | - | 1922 | 9.7 | 0.20 | 18643 | 3729 |
| 12 | 100% PB 0400[6] | 12x20 | 90 | 20.7 | - | 1802 | 9.4 | 0.20 | 16936 | 3336 |
| 13 | 100% PB 0400[6] (web annealed 20 min.) | 12x20 | 90 | 20.7 | - | 1759 | 9.3 | 0.20 | 16356 | 3222 |
| 14 | VISTAMAXX VM2330[8] | 40x140 | 93 | 21.1 | 6.2 | 10164 | 1.6 | 0.24 | 15888 | 3752 |
| 15 | 100% PB 0400[6] (web annealed 5 min.) | 12x20 | 90 | 20.7 | - | 1861 | 8.2 | 0.20 | 15262 | 3007 |

(continued)

| Run No. | Polymeric Material | Carbon Sieve Size | Loading Level, % | EFD, $\mu$m | SL, min | $k_v$, min$^{-1}$ | SL/$\Delta$P, min/mm $H_2O$ | $\rho\beta$, g/cm$^3$ | A, /mm water | $A_{vol}$, g$_{sorbent}$/ cm$^3$$_{Web}$-mm water |
|---|---|---|---|---|---|---|---|---|---|---|
| 16 | 20% FINA 3868[5] + 80% PB 0400 (6) (web annealed 5 min.) | 12x20 | 89 | 20.3 | - | 1833 | 8.1 | 0.20 | 14847 | 2969 |
| 17 | FINA 3960[9] | 12x20 | 90 | 21 | - | 1311 | 11.3 | 0.15 | 14814 | 2222 |
| 18 | 76% FINA 3960[9] + 24% E-1200[10] | 40x140 | 90 | 20 | - | 3834 | 3.8 | 0.16 | 14569 | 2331 |
| 19 | FINA 3960[9] | 40x140 | 91 | 16.1 | - | 4478 | 3.2 | 0.17 | 14330 | 2436 |
| 20 | FINA 3960[9] | 40x140 | 89 | 20 | - | 3588 | 3.8 | 0.14 | 13634 | 1909 |
| 21 | KRATON G1657[10] | 12x20 | 88 | 21.9 | - | 2422 | 5.6 | 0.22 | 13563 | 2984 |
| 22 | 76% FINA 3960[9]+24% E-1200[11] | 12x20 | 90 | 18.9 | - | 1389 | 8.3 | 0.16 | 11525 | 1844 |
| 23 | FINA 3960[9] | 12x20 | 90 | 20 | - | 1348 | 8 | 0.15 | 10784 | 1618 |
| 24 | FINA 3960[9] | 12x20 | 91 | 18.1 | - | 1440 | 7.2 | 0.15 | 10368 | 1555 |
| 25 | DOWLEX 2503[12] | 12x20 | 90 | 20.4 | - | 1942 | 5.3 | 0.19 | 10290 | 1955 |
| 26 | FINA 3960[9] | 40x140 | 89 | 19 | - | 3271 | 2.7 | 0.14 | 8832 | 1236 |

(continued)

| Run No. | Polymeric Material | Carbon Sieve Size | Loading Level, % | EFD, μm | SL, min | $k_v$, min$^{-1}$ | SL/ΔP, min/mm H$_2$O | ρβ, g/cm$^3$ | A, /mm water | $A_{vol}$, g$_{sorbent}$/cm$^3_{Web}$-mm water |
|---|---|---|---|---|---|---|---|---|---|---|
| 27 | FINA 3960[9] | 12x20 | 91 | 19.7 | - | 1216 | 6.3 | 0.14 | 7659 | 1072 |

(1) EXACT 3040 is an ethylene hexene or ethylene octene copolymer available under the trade designation EXACT™ from ExxonMobil Chemical Company.

(2) PS440-200 is a thermoplastic polyurethane elastomer available under the trade designation IROGRAN™ from Huntsman LLC.

(3) VISTAMAXX VM2125 is a polyolefin elastomer available under the trade designation VISTAMAXX™ from ExxonMobil Chemical Company.

(4) ENGAGE 8402 is a polyolefin elastomer available under the trade designation ENGAGE™ from Dow Chemical Company.

(5) FINA 3846 is a polypropylene homopolymer available under the trade designation FINA™ from Atofina Chemicals, Inc.

(6) PB 0400 is Grade PB 0400 thermoplastic polybutylene elastomer available from Basell Polyolefins.

(7) DOWLEX 2517 is a linear low density polyethylene available under the trade designation DOWLEX™ from Dow Chemical Company.

(8) VISTAMAXX VM2330 is a polyolefin elastomer available under the trade designation VISTAMAXX™ from ExxonMobil Chemical Company.

(9) FINA 3960 is a polypropylene homopolymer available under the trade designation FINA™ from Atofina Chemicals, Inc.

(10) KRATON G1657 is a styrenic di-/triblock copolymer available under the trade designation KRATON™ from Kraton Polymers.

(11) E-1200 is an amorphous propylene-ethylene copolymer available under the trade designation EASTOFLEX™ from Eastman Chemicals.

(12) DOWLEX 2503 is a linear low density low molecular weight polyethylene resin formerly available under the trade designation DOWLEX™ from Dow Plastics.

The data in Table 1 show that very high Adsorption Factor **A** values could be obtained. Surprisingly, the Run No. 1 web exhibited a greater Adsorption Factor **A** than the packed carbon bed of Run No. 2. The Run No. 2 web also exhibited a greater Adsorption Factor **A** than the packed carbon bed of Run No. 2, but as shown below an unloaded web made from the same thermoplastic polyurethane was not DMMP resistant. Webs made from polypropylene (Run Nos. 17, 19, 20, 23, 24, 26 and 27) would be DMMP resistant but as shown above had Adsorption Factor **A** values no greater than 1.5 X $10^4$/mm water.

Sorbent particle-free (*viz.*, unloaded) versions of webs made from the Run Nos. 1, 2, 4, 5, 8, 10 and 14 polymeric materials were prepared using an apparatus like that shown in **Fig. 6** in which sorbent particles **74** were not permitted to fall from feed roll **78** into the web. The Run No. 2 polymeric material was used to form a 192 g/m$^2$ unloaded web from two layers of 96 g/m$^2$ unloaded web. The other polymeric materials (*viz.*, those of Run Nos. 1, 2, 4, 5, 8, 10 and 14) were used to form single layer webs with an approximate 200 g/m$^2$ basis weight. Swatches were cut from the resulting unloaded webs, weighed, exposed to air saturated with DMMP vapor for 6 and in most cases 23 days and reweighed to determine the swatch mass and the percent DMMP uptake expressed as a percent of the initial swatch mass. The unloaded web made from the Run No. 2 thermoplastic polyurethane (see Run No. 33, below) was sufficiently degraded after 6 days exposure to prevent taking further weight gain measurements. Set out below in Table 2 are the Run Number, polymeric material, unloaded web basis weight, initial sample mass, and the mass and percent DMMP uptake (expressed as a percent of the initial sample mass) for each sample after 6 or 23 days. The entries in Table 2 are sorted in ascending order according to the percent DMMP uptake after the longest measurement period employed.

**Table 2**

| Run No. | Polymeric Material | Basis Weight, gsm | Initial Sample Mass, g | Mass After 6 Days, g | % DMMP Uptake After 6 Days | Mass After 23 Days, g | % DMMP Uptake After 23 Days |
|---|---|---|---|---|---|---|---|
| 28 | EXACT 3040 | 202 | 0.402 | 0.403 | 0.25 | 0.402 | 0 |

(continued)

| Run No. | Polymeric Material | Basis Weight, gsm | Initial Sample Mass, g | Mass After 6 Days, g | % DMMP Uptake After 6 Days | Mass After 23 Days, g | % DMMP Uptake After 23 Days |
|---|---|---|---|---|---|---|---|
| 29 | DOWLEX 2517 | 205 | 0.430 | 0.431 | 0.23 | 0.431 | 0.23 |
| 30 | VISTAMAXX VM2125 | 198 | 0.416 | 0.417 | 0.24 | 0.417 | 0.24 |
| 31 | ENGAGE 8402 | 208 | 0.453 | 0.454 | 0.22 | 0.455 | 0.44 |
| 32 | VISTAMAXX VM2330 | 203 | 0.377 | 0.378 | 0.27 | 0.379 | 0.53 |
| 33 | PS440-200 | 192 | 0.373 | 0.454 | 21.7 | - | - |

The data in Table 2 shows that unloaded webs made from several polymers exhibiting very high Adsorption Factor **A** values in Table 1 could also resist DMMP vapor exposure. The unloaded web made from thermoplastic polyurethane (Run No. 33) did not survive DMMP vapor exposure, and its exposure test was discontinued after 6 days.

Using the method employed for Table 2, two additional unloaded webs were prepared using blends of polymeric materials. The webs were made by combining 90:10 or 50:50 mixtures of the polyolefin elastomer ENGAGE 8402 (see Run No. 5 from Table 1) and the styrenic block copolymer KRATON G1657 (see Run No. 21 from Table 1) in an extruder and then melt-blowing the extruded mixture to form a single layer unloaded web. Small swatches of the unloaded web samples were weighed, exposed to DMMP vapor for 11 days and reweighed. Set out below in Table 3 are the Run Number, polymeric materials in the blend, unloaded web basis weight, initial sample mass, and the mass and percent DMMP uptake (expressed as a percent of the initial sample mass) after 11 days.

**Table 3**

| Run No. | Polymeric Material | Basis Weight, gsm | Initial Sample Mass, g | Mass After 11 Days, g | % DMMP Uptake After 11 Days |
|---|---|---|---|---|---|
| 34 | 90% ENGAGE 8402 + 10% KRATON G1657 | 112 | 0.214 | 0.217 | 1.40 |
| 35 | 50% ENGAGE 8402 + 50% KRATON G1657 | 118 | 0.269 | 0.274 | 1.86 |

The data in Table 3 shows that unloaded webs made from the blended polymers exhibited reasonably good DMMP resistance. Exposing the web for 11 days represents a more stringent test than a 6 day exposure, and the sample sizes were smaller than those used in Table 2 and thus somewhat more subject to weighing errors. Had the Run No. 35 blend been exposed for only 6 days (or had the blend ratio or polymeric components been adjusted slightly), it might exhibit no more than about 1 weight percent DMMP uptake. It might also have done so over the 11 day exposure period had a larger sample swatch been employed.

**Example 2**

A variety of thermoplastic polymers were formed into discs by pressing extrusion grade pellets as received from the polymer manufacturer in a heated laboratory hydraulic press (available from Carver, Inc.). The press was equipped with stainless steel platens covered with polytetrafluoroethylene liners. A bump stop made from 0.5 mm feeler gauge stock was employed to regulate the disc thickness. The press temperature was varied depending on the particular polymer being pressed but generally was set to about 200-250 °C. Pressures of about 207 kPa and pressing times of about 15 seconds were employed. The resulting resin coupons were folded and repressed until air gaps and other imperfections were removed, to provide discs with target dimensions of about 50 mm diameter and 0.5 mm thickness. The discs were placed in a desiccator and arranged for even exposure to the desiccator internal atmosphere. Sufficient DMMP to provide a saturated internal atmosphere was also placed in the desiccator. The discs were weighed initially and at various time intervals to determine the disc mass and the percent DMMP uptake expressed as a percent of the initial disc mass. The physical state of each disc and the occurrence of visible degradation were also noted. Set out below in Table 4 are the Run No., polymeric material, initial disc mass, and the percent DMMP uptake after 13 hours and 4 days. The entries in Table 4 are sorted in descending order according to the percent DMMP uptake after 13 hours.

**Table 4**

| Run No. | Polymeric Material | Initial Disc Mass, g | % DMMP Uptake After 13 Hours | % DMMP Uptake After 4 Days |
|---------|-------------------|---------------------|------------------------------|----------------------------|
| 1 | PS455-20A[1] | 0.765 | 3.92 | 22.2[16] |
| 2 | PS440-200[2] | 0.701 | 3.57 | 18.8[17] |
| 3 | PS164-400[3] | 0.736 | 3.13 | 21.9[18] |
| 4 | Polyolefin alloy[4] | 0.600 | 2.83 | 13.5[17] |
| 5 | HYTREL 4556[5] | | | 10.6 |
| 6 | CA 100-200[6] | 0.815 | 1.47 | 9.94[18] |
| 7 | BYNEL 3022[7] | 0.499 | 1.40 | 8.82 |
| 8 | PE90-208[8] | 0.815 | 1.35 | 13.9 |
| 9 | THV 220G[9] | 1.177 | 0.93 | 4.25 |
| 10 | SOLTEX PVDF[10] | 1.228 | 0.57 | 4.32 |
| 11 | ELVAX 3174[11] | 0.607 | 0.49 | 0.66 |
| 12 | THV 500G[12] | 1.155 | 0.26 | 0.61 |
| 13 | ENGAGE 8401[13] | 0.538 | 0.19 | 0.37 |
| 14 | VISTAMAXX VM3000[14] | 0.507 | 0.0 | 0.2 |

(continued)

| Run No. | Polymeric Material | Initial Disc Mass, g | % DMMP Uptake After 13 Hours | % DMMP Uptake After 4 Days |
|---|---|---|---|---|
| 15 | ENGAGE 8411[15] | 0.516 | 0.0 | 0.2 |

(1) PS455-20A is a thermoplastic polyurethane elastomer available under the trade designation IROGRAN™ from Huntsman LLC.

(2) PS440-200 is a thermoplastic polyurethane elastomer available under the trade designation IROGRAN™ from Huntsman LLC.

(3) PS 164-400 is a thermoplastic polyurethane elastomer available under the trade designation IROGRAN™ from Huntsman LLC.

(4) Polyolefin alloy is product no. FM 060105-4 available from Noveon, Inc.

(5) HYTREL 4556 is a thermoplastic polyester available under the trade designation HYTREL™ from E. I. DuPont de Nemours & Co.

(6) CA 100-200 is a thermoplastic polyurethane elastomer available under the trade designation IROGRAN™ from Huntsman LLC.

(7) BYNEL 3022 is an anhydride-modified ethylene vinyl acetate polyester available under the trade designation HYTREL™ from E. 1. DuPont de Nemours & Co.

(8) PE90-208 is a thermoplastic polyurethane elastomer available under the trade designation IROGRAN™ from Huntsman LLC.

(9) THV 220G is a fluorothermoplastic terpolymer available under the trade designation THV™ from Dyneon, LLC.

(10) SOLTEX PVDF is a thermoplastic polyvinylidene fluoride resin available under the trade designation SOLTEX™ from Solvay Solexis.

(11) ELVAX 3174 is an ethylene vinyl acetate polymer available under the trade designation ELVAX™ from E. I. DuPont de Nemours & Co.

(12) THV 500G is a fluorothermoplastic terpolymer available under the trade designation THV™ from Dyneon, LLC.

(13) ENGAGE 8401 is a polyolefin elastomer available under the trade designation ENGAGE™ from Dow Chemical Company.

(14) VISTAMAXX VM3000 is a polyolefin elastomer available under the trade designation VISTAMAXX™ from ExxonMobil Chemical Company.

(15) ENGAGE 8411 is a polyolefin elastomer available under the trade designation ENGAGE™ from Dow Chemical Company.

(16) Sample was limp, and saturated with DMMP.

(17) Sample exhibited severe distortion and warping.

(18) Sample exhibited moderate distortion.

The data in Table 4 shows relative resistance to DMMP uptake of discs made from a variety of polymeric materials. Exposing a disc for a few hours or even a few days to DMMP vapor may represent a less stringent test than exposing an unloaded web made from the same polymer for 6 days. However, preparing polymer disc samples is easier and less expensive than making a web and may provide a useful predictor for the resistance to DMMP uptake of a web made from the same or a similar polymeric material.

**Comparison Example**

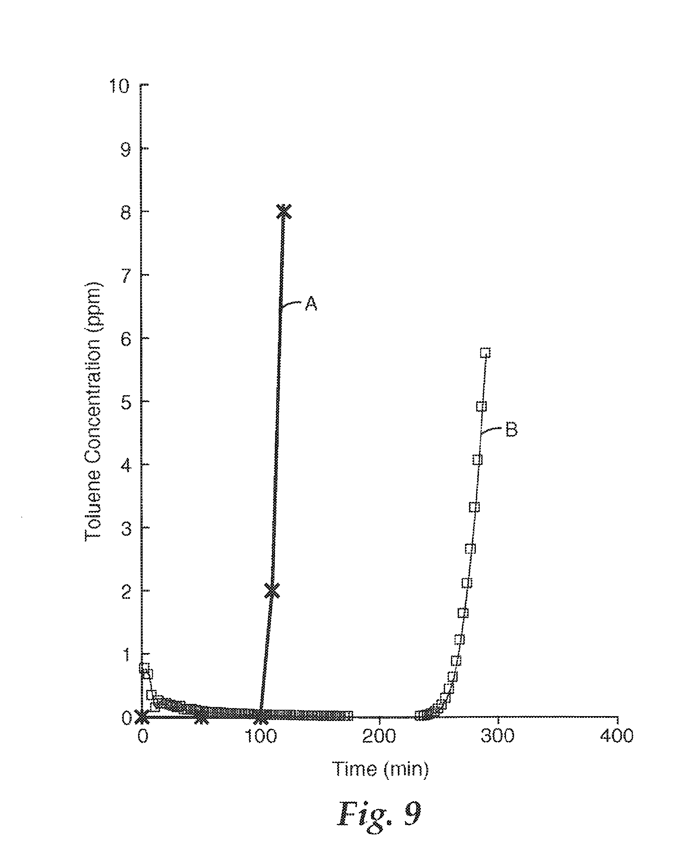

Using the general method of Example 1, a single layer web was made using IROGRAN PS440-200 thermoplastic polyurethane and 40x140 carbon granules. The completed web contained 0.202 g/cm$^2$ carbon (91 wt. % carbon) and had a 15 micrometer effective fiber diameter. An 81 cm$^2$ sample of this web containing 16.4 g total carbon was exposed to <35% relative humidity air flowing at 14 L/min and containing 250 ppm toluene vapor. **Fig. 9** shows a plot of the downstream toluene concentration for this web (Curve **B**) and for a web (Curve **A**) made according to Example 19 of U.S. Patent No. 3,971,373 (Braun). The Braun Example 19 web contained polypropylene fibers and 17.4 g total carbon (89 wt. % carbon). As shown in **Fig. 9**, the Braun Example 19 web exhibited substantially less adsorption capacity, even though the above-described polyurethane-based web contained less carbon. The polyurethane-based web's improved performance is believed to be due to its greater Adsorption Factor **A**.

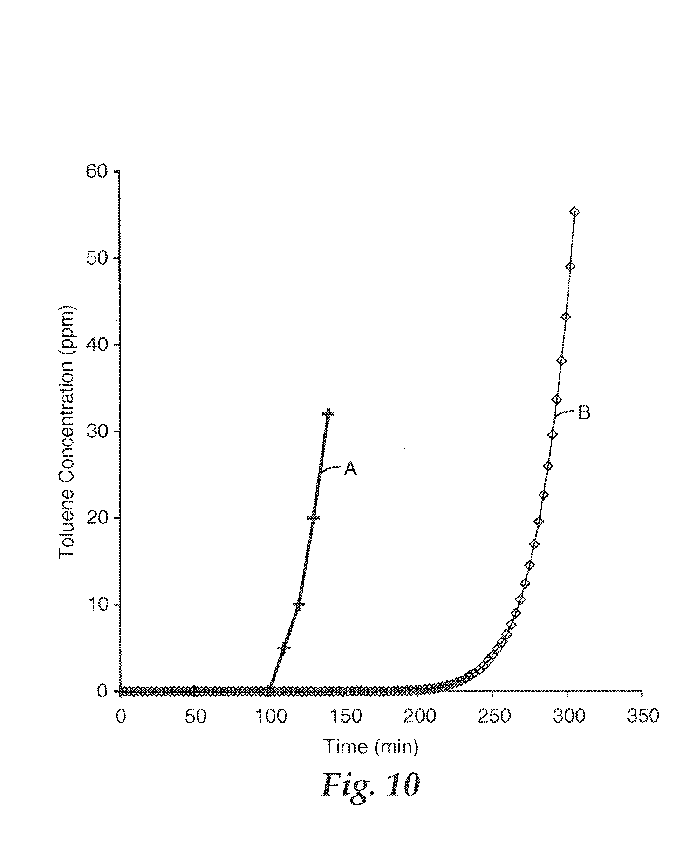

A two layer polyurethane-based web was made according to the general method of Example 1, using IROGRAN PS440-200 thermoplastic polyurethane, 12x20 carbon granules in the first layer and 40x 140 carbon granules in the second layer. The first layer contained 0.154 g/cm$^2$ carbon (91 wt. % carbon) and had a 26 micrometer effective fiber diameter. The second layer contained 0.051 g/cm$^2$ carbon (91 wt. % carbon) and had a 15 micrometer effective fiber

diameter. An 81 cm$^2$ sample of this two-layer polyurethane-based web containing 16.6 g total carbon was exposed to <35% relative humidity air flowing at 14 L/min and containing 350 ppm toluene vapor. **Fig. 10** shows a plot of the downstream toluene concentration for this two-layer polyurethane-based web (Curve **B**) and for a web (Curve **A**) made according to Braun Example 20. The Braun Example 20 web contained polypropylene fibers and 18.9 g total carbon (85 wt. % carbon). As shown in **Fig. 10**, the Braun Example 20 web exhibited substantially less adsorption capacity, even though the above-described two-layer polyurethane-based web contained less carbon. The two-layer polyurethane-based web's improved performance is again believed to be due to its greater Adsorption Factor **A**.

**Claims**

1. A porous sheet article comprising a self-supporting nonwoven web of less than 20 weight percent polymeric fibers exhibiting no more than about 1 weight percent dimethyl methyl phosphonate uptake at 6 days using method described in the description and at least 80 weight percent sorbent particles enmeshed in the web, the fibers having sufficiently greater elasticity or sufficiently greater crystallization shrinkage than similar caliper polypropylene fibers, the sorbent particles being sufficiently evenly distributed in the web and the fiber polymer(s) being such that the web has an Adsorption Factor **A** of at least 1.6 X 10$^4$/mm water as described in the description.

2. An article according to claim 1 comprising a plurality of nonwoven web layers, wherein the fibers comprise thermoplastic ethylene hexene or ethylene octene copolymer, wherein the sorbent particles comprise activated carbon or alumina, and wherein at least 84 weight percent sorbent particles are enmeshed in the web.

3. An article according to claim 2 having an Adsorption Factor A of at least 2 X 10$^4$/mm water.

4. An article according to claim 1 comprising a filter comprising a housing supporting the porous sheet article.

5. An article according to claim 1 comprising a chemical protective suit, hood, individual enclosure or other individual protective equipment or device into which air is filtered through the porous sheet article or comprising a shelter or other collective protection equipment or device into which air is filtered through the porous sheet article.

6. A process for making a porous sheet article comprising a self-supporting nonwoven web of polymeric fibers and sorbent particles, the process comprising:

   a) flowing molten polymer through a plurality of orifices to form filaments;
   b) attenuating the filaments into fibers;
   c) directing a stream of sorbent particles amidst the filaments or fibers; and
   d) collecting the fibers and sorbent particles as a nonwoven web comprising less than 20 weight percent polymeric fibers exhibiting no more than about 1 weight percent dimethyl methyl phosphonate uptake at 6 days using the method described in the description and at least 80 weight percent sorbent particles enmeshed in the web wherein the fibers have sufficiently greater elasticity or sufficiently greater crystallization shrinkage than similar caliper polypropylene fibers, the sorbent particles are sufficiently evenly distributed in the web and the polymer is such that that the web has an Adsorption Factor **A** of at least 1.6 X 10$^4$/mm water as described in the description.

7. A process according to claim 6 comprising meltblowing the filaments, wherein the molten polymer comprises thermoplastic ethylene hexene or ethylene octene copolymer and wherein the sorbent particles comprise activated carbon or alumina.

8. A respiratory device having an interior portion that generally encloses at least the nose and mouth of a wearer, an air intake path for supplying ambient air to the interior portion, and a porous sheet article disposed across the air intake path to filter such supplied air, the porous sheet article comprising a self-supporting nonwoven web of less than 20 weight percent polymeric fibers exhibiting no more than about 1 weight percent dimethyl methyl phosphonate uptake at 6 days using the method described in the description and at least 80 weight percent sorbent particles enmeshed in the web, the fibers having sufficiently greater elasticity or sufficiently greater crystallization shrinkage than similar caliper polypropylene fibers, the sorbent particles being sufficiently evenly distributed in the web and the fiber polymer(s) being such that the article has an Adsorption Factor A of at least 1.6 X 10$^4$/mm water as described in the description.

9. A replaceable filter element for a respiratory device, the element comprising a support structure for mounting the element on the device, a housing and a porous sheet article disposed in the housing so that the element can filter air passing into the device, the article comprising a self-supporting nonwoven web of less than 20 weight percent polymeric fibers exhibiting no more than about 1 weight percent dimethyl methyl phosphonate uptake at 6 days using the method described in the description and at least 80 weight percent sorbent particles enmeshed in the web, the fibers having sufficiently greater elasticity or sufficiently greater crystallization shrinkage than similar caliper polypropylene fibers, the sorbent particles being sufficiently evenly distributed in the web and the fiber polymer(s) being such that that the element has an Adsorption Factor **A** of at least 1.6 X 10$^4$/mm water as described in the description.

10. A filter element according to claim 9 wherein the polymeric fibers comprise thermoplastic ethylene hexene or ethylene octene copolymer, and wherein the sorbent particles comprise activated carbon or alumina, wherein at least 84 weight percent sorbent particles are enmeshed in the web, and wherein the web has an Adsorption Factor **A** of at least 2 X 10$^4$/mm water.

## Patentansprüche

1. Poröser Stoffbahngegenstand, welcher einen selbsttragenden Vliesstoff mit weniger als 20 Gewichtsprozent Polymerfasern, die nach 6 Tagen unter Verwendung des in der Beschreibung beschriebenen Verfahrens nicht mehr als etwa 1 Gewichtsprozent Dimethylmethylphosphonat-Aufnahme zeigen, und mindestens 80 Gewichtsprozent Sorptionspartikel verwoben in dem Vlies aufweist, wobei die Fasern eine ausreichend höhere Elastizität oder ausreichend höhere Kristallisierungsschrumpfung als Polypropylenfasern mit ähnlichem Endmaß aufweisen, die Sorptionspartikel ausreichend gleichmäßig in dem Vlies verteilt sind und das/die Faserpolymer/e derart ist/sind, dass das Vlies einen Adsorptionsfaktor **A** von mindestens 1,6 X 10$^4$/mm Wasser aufweist, wie in der Beschreibung beschrieben.

2. Gegenstand nach Anspruch 1, welcher mehrere Vliesstoffschichten aufweist, wobei die Fasern thermoplastisches Ethylenhexen- oder Ethylenocten-Copolymer aufweisen, wobei die Sorptionspartikel Aktivkohle oder Aluminiumoxid aufweisen, und wobei mindestens 84 Gewichtsprozent Sorptionspartikel in dem Vlies verwoben sind.

3. Gegenstand nach Anspruch 2, welcher einen Adsorptionsfaktor **A** von mindestens 2 X 10$^4$/mm Wasser aufweist.

4. Gegenstand nach Anspruch 1, welcher einen Filter aufweist, der ein Gehäuse, das den porösen Stoffbahngegenstand stützt, aufweist.

5. Gegenstand nach Anspruch 1, welcher einen chemischen Schutzanzug, eine Haube, eine einzelne Umhüllung oder ein/e andere/s einzelne/s Schutzausrüstung oder -gerät aufweist, in welches/e Luft durch den porösen Stoffbahngegenstand gefiltert wird, oder welcher/e einen Schutzraum oder ein/e andere/s kollektive/s Schutzausrüstung oder -gerät aufweist, in welches/e Luft durch den porösen Stoffbahngegenstand gefiltert wird.

6. Verfahren zum Herstellen eines porösen Stoffbahngegenstandes, welcher einen selbsttragenden Vliesstoff aus Polymerfasern und Sorptionspartikel aufweist, wobei das Verfahren Folgendes umfasst:

   a) das Fließen von geschmolzenem Polymer durch mehrere Öffnungen zum Bilden von Filamenten;
   b) das Verdünnen der Filamente in Fasern;
   c) das Richten eines Stromes von Sorptionspartikeln inmitten der Filamente oder Fasern; und
   d) das Sammeln der Fasern und Sorptionspartikel als ein Vliesstoff, der weniger als 20 Gewichtsprozent Polymerfasern, die nach 6 Tagen unter Verwendung des in der Beschreibung beschriebenen Verfahrens nicht mehr als etwa 1 Gewichtsprozent Dimethylmethylphosphonat-Aufnahme zeigen, und mindestens 80 Gewichtsprozent Sorptionspartikel verwoben in dem Vlies aufweist,
   wobei die Fasern eine ausreichend höhere Elastizität oder ausreichend höhere Kristallisierungsschrumpfung als Polypropylenfasern mit ähnlichem Endmaß aufweisen, die Sorptionspartikel ausreichend gleichmäßig in dem Vlies verteilt sind und das Polymer derart ist, dass das Vlies einen Adsorptionsfaktor **A** von mindestens 1,6 X 10$^4$/mm Wasser aufweist, wie in der Beschreibung beschrieben.

7. Verfahren nach Anspruch 6, welches das Heißluftziehen der Filamente aufweist, wobei das geschmolzene Polymer thermoplastisches Ethylenhexen- oder Ethylenocten-Copolymer aufweist und wobei die Sorptionspartikel Aktivkohle oder Aluminiumoxid aufweisen.

8. Atemgerät, welches einen inneren Abschnitt, der im Allgemeinen mindestens die Nase und den Mund eines Trägers umschließt, einen Lufteinlasspfad zum Bereitstellen von Umgebungsluft an den inneren Abschnitt und einen porösen Stoffbahngegenstand, der über den Lufteinlasspfad hinweg angeordnet ist, um die derart bereitgestellte Luft zu filtern, aufweist, wobei der poröse Stoffbahngegenstand einen selbsttragenden Vliesstoff mit weniger als 20 Gewichtsprozent Polymerfasern, die nach 6 Tagen unter Verwendung des in der Beschreibung beschriebenen Verfahrens nicht mehr als etwa 1 Gewichtsprozent Dimethylmethylphosphonat-Aufnahme zeigen, und mindestens 80 Gewichtsprozent Sorptionspartikel verwoben in dem Vlies aufweist, wobei die Fasern eine ausreichend höhere Elastizität oder ausreichend höhere Kristallisierungsschrumpfung als Polypropylenfasern mit ähnlichem Endmaß aufweisen, die Sorptionspartikel ausreichend gleichmäßig in dem Vlies verteilt sind und das/die Faserpolymer/e derart ist/sind, dass der Gegenstand einen Adsorptionsfaktor **A** von mindestens 1,6 X $10^4$/mm Wasser aufweist, wie in der Beschreibung beschrieben.

9. Austauschbares Filterelement für ein Atemgerät, wobei das Element eine Stützstruktur zum Befestigen des Elementes an dem Gerät, ein Gehäuse und einen porösen Stoffbahngegenstand, der derart in dem Gehäuse angeordnet ist, dass das Element Luft filtern kann, die in das Gerät eintritt, aufweist, wobei der Gegenstand einen selbsttragenden Vliesstoff mit weniger als 20 Gewichtsprozent Polymerfasern, die nach 6 Tagen unter Verwendung des in der Beschreibung beschriebenen Verfahrens nicht mehr als etwa 1 Gewichtsprozent Dimethylmethylphosphonat-Aufnahme zeigen, und mindestens 80 Gewichtsprozent Sorptionspartikel verwoben in dem Vlies aufweist, wobei die Fasern eine ausreichend höhere Elastizität oder ausreichend höhere Kristallisierungsschrumpfung als Polypropylenfasern mit ähnlichem Endmaß aufweisen, die Sorptionspartikel ausreichend gleichmäßig in dem Vlies verteilt sind und das/die Faserpolymer/e derart ist/sind, dass das Element einen Adsorptionsfaktor **A** von mindestens 1,6 X $10^4$/mm Wasser aufweist, wie in der Beschreibung beschrieben.

10. Filterelement nach Anspruch 9, wobei die Polymerfasern thermoplastisches Ethylenhexen- oder Ethylenocten-Copolymer aufweisen und wobei die Sorptionspartikel Aktivkohle oder Aluminiumoxid aufweisen, wobei mindestens 84 Gewichtsprozent Sorptionspartikel in dem Vlies verwoben sind, und wobei das Vlies einen Adsorptionsfaktor **A** von mindestens 2 X $10^4$/mm Wasser aufweist.

## Revendications

1. Article sous forme de feuille poreuse comprenant une nappe non tissée autoportante contenant moins de 20 % en poids de fibres polymères présentant une absorption du phosphonate de diméthylméthyle ne dépassant pas environ 1 % en poids à 6 jours en utilisant la méthode exposée dans le descriptif et au moins 80 % en poids de particules sorbantes enchevêtrées dans la nappe, les fibres ayant une élasticité suffisamment supérieure ou un retrait lié à la cristallisation suffisamment supérieur à ceux de fibres de polypropylène d'épaisseur similaire, les particules sorbantes étant réparties de façon suffisamment uniforme dans la nappe et le(s) polymère(s) des fibres étant tel(s) que la nappe ait un facteur d'adsorption **A** d'au moins 1,6 x $10^4$/mm d'eau comme il est exposé dans le descriptif.

2. Article selon la revendication 1, comprenant une pluralité de couches de nappe non tissée, dans lequel les fibres comprennent un copolymère thermoplastique d'éthylène-hexène ou d'éthylène-octène, dans lequel les particules sorbantes comprennent du carbone activé ou de l'alumine, et dans lequel au moins 84 % en poids de particules sorbantes sont enchevêtrées dans la nappe.

3. Article selon la revendication 2, ayant un facteur d'adsorption A d'au moins 2 x $10^4$/mm d'eau.

4. Article selon la revendication 1, comprenant un filtre qui comprend un boîtier portant l'article sous forme de feuille poreuse.

5. Article selon la revendication 1, comprenant une tenue de protection contre les substances chimiques, une hotte, une enceinte individuelle ou un autre équipement ou appareil de protection individuelle dans lequel de l'air est introduit après filtration par passage à travers l'article sous forme de feuille poreuse, ou comprenant un abri ou un autre équipement ou appareil de protection collective dans lequel de l'air est introduit après filtration par passage à travers l'article sous forme de feuille poreuse.

6. Procédé de fabrication d'un article sous forme de feuille poreuse comprenant une nappe non tissée autoportante de fibres polymères et de particules sorbantes, le procédé consistant à :

a) faire s'écouler un polymère fondu à travers une pluralité d'orifices pour former des filaments ;

b) amenuiser les filaments pour produire des fibres ;

c) diriger un flux de particules sorbantes au milieu des filaments ou des fibres ; et

d) collecter les fibres et les particules sorbantes sous la forme d'une nappe non tissée contenant moins de 20 % en poids de fibres polymères présentant une absorption du phosphonate de diméthylméthyle ne dépassant pas environ 1 % en poids à 6 jours en utilisant la méthode exposée dans le descriptif et au moins 80 % en poids de particules sorbantes enchevêtrées dans la nappe,

dans lequel les fibres ont une élasticité suffisamment supérieure ou un retrait lié à la cristallisation suffisamment supérieur à ceux de fibres de polypropylène d'épaisseur similaire, les particules sorbantes sont réparties de façon suffisamment uniforme dans la nappe et le polymère est tel que la nappe ait un facteur d'adsorption A d'au moins 1,6 x $10^4$/mm d'eau comme il est exposé dans le descriptif.

7. Procédé selon la revendication 6, comprenant l'extrusion-soufflage des filaments, dans lequel le polymère fondu comprend un copolymère thermoplastique d'éthylène-hexène ou d'éthylène-octène et dans lequel les particules sorbantes comprennent du carbone activé ou de l'alumine.

8. Appareil respiratoire comportant une partie intérieure entourant généralement au moins le nez et la bouche d'une personne qui le porte, une voie d'entrée d'air conçue pour amener l'air ambiant dans la partie intérieure, et un article sous forme de feuille poreuse disposé en travers de la voie d'entrée d'air pour filtrer l'air ainsi amené, l'article sous forme de feuille poreuse comprenant une nappe non tissée autoportante contenant moins de 20 % en poids de fibres polymères présentant une absorption du phosphonate de diméthylméthyle ne dépassant pas environ 1 % en poids à 6 jours en utilisant la méthode exposée dans le descriptif et au moins 80 % en poids de particules sorbantes enchevêtrées dans la nappe, les fibres ayant une élasticité suffisamment supérieure ou un retrait lié à la cristallisation suffisamment supérieur à ceux de fibres de polypropylène d'épaisseur similaire, les particules sorbantes étant réparties de façon suffisamment uniforme dans la nappe et le(s) polymère(s) des fibres étant tel(s) que l'article ait un facteur d'adsorption A d'au moins 1,6 x $10^4$/mm d'eau comme il est exposé dans le descriptif.

9. Élément de filtre remplaçable pour un appareil respiratoire, l'élément comprenant une structure de support pour le montage de l'élément sur l'appareil, un boîtier et un article sous forme de feuille poreuse disposé dans le boîtier de telle sorte que l'élément puisse filtrer l'air arrivant dans l'appareil, l'article comprenant une nappe non tissée autoportante contenant moins de 20 % en poids de fibres polymères présentant une absorption du phosphonate de diméthylméthyle ne dépassant pas environ 1 % en poids à 6 jours en utilisant la méthode exposée dans le descriptif et au moins 80 % en poids de particules sorbantes enchevêtrées dans la nappe, les fibres ayant une élasticité suffisamment supérieure ou un retrait lié à la cristallisation suffisamment supérieur à ceux de fibres de polypropylène d'épaisseur similaire, les particules sorbantes étant réparties de façon suffisamment uniforme dans la nappe et le (s) polymère(s) des fibres étant tel(s) que l'élément ait un facteur d'adsorption A d'au moins 1,6 x $10^4$/mm d'eau comme il est exposé dans le descriptif.

10. Élément de filtre selon la revendication 9, dans lequel les fibres polymères comprennent un copolymère thermoplastique d'éthylène-hexène ou d'éthylène-octène, dans lequel les particules sorbantes comprennent du carbone activé ou de l'alumine, dans lequel au moins 84 % en poids de particules sorbantes sont enchevêtrées dans la nappe, et dans lequel la nappe a un facteur d'adsorption A d'au moins 2 x $10^4$/mm d'eau.

*Fig. 1*

*Fig. 2*

*Fig. 3*

**Fig. 4**

**Fig. 5**

*Fig. 6*

*Fig. 7*

*Fig. 8*

*Fig. 9*

*Fig. 10*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10983770 B
- US 2988469 A, Watson
- US 3971373 A, Braun
- US 4429001 A, Kolpin
- US 4681801 A, Eian
- US 4741949 A, Morman
- US 4797318 A, Brooker
- US 4948639 A, Brooker
- US 5035240 A, Braun
- US 5328758 A, Markell
- US 5720832 A, Minto
- US 5972427 A, Mühlfeld
- US 5885696 A, Groeger
- US 5952092 A, Groeger
- US 5972808 A, Groeger
- US 6024782 A, Freund
- US 6024813 A, Groeger
- US 6077588 A, Koslow
- US 6102039 A, Springett

- WO 0039379 A
- WO 0039380 A
- US 3217715 A, Berger
- US 3474600 A, Tobias
- US 3538020 A, Heskett
- US 3919369 A, Holden
- US 4665050 A, Degen
- US 4790306 A, Braun
- US 5033465 A, Braun
- US 5078132 A, Braun
- US 5147722 A, Koslow
- US 5332426 A, Tang
- US 5665148 A, Muhlfeld
- US 6391429 B, Senkus
- US 6840986 B1, Koslow
- US 4657802 A, Morman
- US 5062421 A, Burns
- US 6234171 B1, Springett

### Non-patent literature cited in the description

- **WOOD.** *Journal of the American Industrial Hygiene Association,* 1994, vol. 55 (1), 11-15